**Europäisches Patentamt**

**European Patent Office**

**Office européen des brevets**

(19)

(11)  **EP 1 602 699 A1**

(12)  **EUROPÄISCHE PATENTANMELDUNG**

(43)  Veröffentlichungstag:
      **07.12.2005  Patentblatt 2005/49**

(51)  Int Cl.⁷: **C09J 7/04**, B29C 44/34,
      B29C 44/56

(21)  Anmeldenummer: **05103612.7**

(22)  Anmeldetag: **02.05.2005**

(84)  Benannte Vertragsstaaten:
      **AT BE BG CH CY CZ DE DK EE ES FI FR GB GR
      HU IE IS IT LI LT LU MC NL PL PT RO SE SI SK TR**
      Benannte Erstreckungsstaaten:
      **AL BA HR LV MK YU**

(30)  Priorität: **04.06.2004  DE 102004027557**

(71)  Anmelder: **tesa AG**
      **20253 Hamburg (DE)**

(72)  Erfinder:
      • **Kolmorgen, Frank**
        **22339 Hamburg (DE)**
      • **Quednau, Torben**
        **20359 Hamburg (DE)**

(74)  Vertreter: **Stubbe, Andreas**
      **tesa AG,**
      **Kst. 9500 - Bf. 645,**
      **Quickbornstrasse 24**
      **20253 Hamburg (DE)**

(54)  **Verwendung eines einseitig selbstklebend ausgerüsteten Klebebands als Entlüftungsband mit einer Luftdurchlässigkeit von grösser 30 cm3/(cm2 * s)**

(57)  Verwendung eines einseitig selbstklebend ausgerüsteten Klebebands als Entlüftungsband, indem das Klebeband über eine Öffnung in einem abgeschlossenen Raum geklebt wird, der einen höheren Luftdruck aufweist als der umgebende Raum, insbesondere bei der Ausschäumung der Seitenwände von Weißgeräten wie Kühlschränke, wobei

das einseitig selbstklebend ausgerüstete Klebeband einen Träger, auf den einseitig eine Heißschmelzklebemasse aufgebracht ist, sowie eine Luftdurchlässigkeit trägerseitig von größer 30 $cm^3/(cm^2 * s)$ aufweist,
das Klebeband mit heißen Nadeln, die sich bevorzugt auf einer Nadelwalze befinden, perforiert ist,
die Anzahl der Löcher mindestens 5/$cm^2$ beträgt.

Fig. 1

EP 1 602 699 A1

**Beschreibung**

Die vorliegende Erfindung betrifft die Verwendung eines einseitig selbstklebend ausgerüsteten Klebebands als Entlüftungsband mit einer Luftdurchlässigkeit von größer 30 cm$^3$/(cm$^2$ * s) sowie die Verwendung desselben als Entlüftungsband, indem das Klebeband über eine Öffnung in einem abgeschlossenen Raum geklebt wird, der einen höheren Luftdruck aufweist als der umgebende Raum, insbesondere bei der Ausschäumung der Seitenwände von Weißgeräten wie Kühlschränken.

Das Ausschäumen der Seitenwände von Weißgeräten geschieht üblicherweise, indem in den Hohlraum der Seitenwand durch eine Öffnung das flüssige Polyurethan eingefüllt wird. Das Polyurethan schäumt anschließend auf, um den Hohlraum auszufüllen.

Um zu verhindern, dass das Polyurethan beziehungsweise der Polyurethanschaum durch die Einfüllöffnung beziehungsweise Montageöffnungen austritt, werden diese Öffnungen mit einem Klebeband verschlossen.

Das dabei entstehende Problem ist, dass sich durch das Aufschäumen im Hohlraum ein Überdruck einstellt, der abgebaut werden muss, während die Einfüllöffnung mit dem Klebeband verschlossen ist.

Aus diesem Grund werden als Klebeband solche Bänder genommen, die eine gewisse Luftdurchlässigkeit aufweisen. Bisher war es aber nicht möglich, die seitens der Weißgerätehersteller geforderten Luftdurchlässigkeitswerte für die Klebebänder zu garantieren.

Perforierte Klebebänder sind aus der DE 102 52 516 A1 bekannt. Dort wird ein lackverträglicher Selbstklebeartikel zum mechanischen Schutz von lackierten Kunststoffanbauteilen von Automobilen mit einem folienförmigen Trägermaterial beschrieben, dessen Außenseite mit einer textilen Schicht aus Maschenware kaschiert ist und dessen Innenseite durch Aufbringen einer Selbstklebemasse haftklebrig ausgerüstet ist.

In einer bevorzugten Ausführungsform, und zwar bei Einsatz auf lackierten Kunststoffteilen mit einem hohen Restlösungsmittelgehalt im Lack, etwa bedingt durch niedrige Trockentemperaturen, kann das Trägermaterial zum Zweck einer besseren Gasdurchlässigkeit perforiert sein.

Mit der DE 197 55 436 A1 ist ein Verfahren zur zumindest partiellen direkten Beschichtung eines dehnfähigen Trägermaterials mit einer Haftklebemasse bekannt geworden.

Danach wird das Trägermaterial mittels einer transportierenden Vorrichtung derartig gegen eine Beschichtungsvorrichtung geführt, dass durch die Beschichtungsvorrichtung die Haftklebemasse auf das Trägermaterial aufgetragen wird, wobei auf der transportierenden Vorrichtung Haft- oder Halteeinrichtungen vorhanden sind. Diese Einrichtungen bringen die zum Zuführen zur und zum Trennen von der Beschichtungseinheit notwendigen Kräfte in derartiger Weise auf, dass bei der Beschichtung die Eigenschaften des Trägers nicht verändert werden.

In einer als vorteilhaft beschriebenen Ausführungsform ist die Halteeinrichtung eine Nadelwalze.

Nadelwalzen zum Perforieren, Prägen, Transportieren und Öffnen von Fässern oder ähnlichem sind weit verbreitet und kommerziell erhältlich beispielsweise bei der Firma tambula in Bebra oder bei de Firma Burckhardt in Basel.

Aufgabe der vorliegenden Erfindung ist, ein Entlüftungsband, insbesondere bei der Ausschäumung der Seitenwände von Weißgeräten wie Kühlschränken, zur Verfügung zu stellen, das in der Lage ist, eine vorgegebene Luftdurchlässigkeit trägerseitig und masseseitig reproduzierbar zu garantieren.

Gelöst wird diese Aufgabe durch die Verwendung eines einseitig selbstklebend ausgerüsteten Klebebands, wie es im Hauptanspruch niedergelegt ist. Gegenstand der Unteransprüche sind vorteilhafte Weiterentwicklungen des Erfindungsgegenstandes.

Demgemäß betrifft die Erfindung die Verwendung eines einseitig selbstklebend ausgerüsteten Klebebands als Entlüftungsband, indem das Klebeband über eine Öffnung in einem abgeschlossenen Raum geklebt wird, der einen höheren Luftdruck aufweist als der umgebende Raum, insbesondere bei der Ausschäumung der Seitenwände von Weißgeräten wie Kühlschränke, wobei

- das einseitig selbstklebend ausgerüstete Klebeband einen Träger, auf den einseitig eine Heißschmelzklebemasse aufgebracht ist, sowie eine Luftdurchlässigkeit trägerseitig von größer 30 cm$^3$/(cm$^2$ * s) aufweist,
- das Klebeband mit heißen Nadeln, die sich bevorzugt auf einer Nadelwalze befinden, perforiert ist,
- die Anzahl der Löcher mindestens 5/cm$^2$ beträgt.

In einer ersten bevorzugten Ausführungsform ist das Klebeband zwischen 150 und 500 μm, insbesondere zwischen 200 und 350 μm dick.

Die Reißdehnung des Klebebands liegt gemäß einer vorteilhaften Weiterbildung zwischen 10 % und 50 %, die Höchstzugkraft zwischen 20 und 40 N/cm, die Klebkraft auf Stahl über 1 N/cm, besonders größer 2,0 N/cm.

Weiter vorzugsweise weist das Klebeband eine Luftdurchlässigkeit trägerseitig von größer 40 cm$^3$/(cm$^2$ * s), insbesondere von größer 50 cm$^3$/(cm$^2$ * s) auf

Die Luftdurchlässigkeit masseseitig sollte größer 50 cm$^3$/(cm$^2$ * s) sein, bevorzugt größer 60 cm$^3$/(cm$^2$ * s), besonders

bevorzugt größer 75 $cm^3/(cm^2 * s)$.

Der Masseauftrag liegt nach einer bevorzugten Ausführungsform zwischen 40 und 60 $g/m^2$.

Als Trägermaterial für das Klebeband können alle bekannten textilen Träger wie Gewebe, Gewirke oder Vliese verwendet werden, wobei unter "Vlies" zumindest textile Flächengebilde gemäß EN 29092 (1988) sowie Nähwirkvliese und ähnliche Systeme zu verstehen sind.

Ebenfalls können Abstandsgewebe und -gewirke mit Kaschierung verwendet werden. Derartige Abstandsgewebe werden in der EP 0 071 212 B1 offenbart. Abstandsgewebe sind mattenförmige Schichtkörper mit einer Deckschicht aus einem Faser- oder Filamentvlies, einer Unterlagsschicht und zwischen diesen Schichten vorhandene einzelne oder Büschel von Haltefasern, die über die Fläche des Schichtkörpers verteilt durch die Partikelschicht hindurchgenadelt sind und die Deckschicht und die Unterlagsschicht untereinander verbinden. Als zusätzliches, aber nicht erforderliches Merkmal sind gemäß EP 0 071 212 B1 in den Haltefasern Partikel aus inerten Gesteinspartikeln, wie zum Beispiel Sand, Kies oder dergleichen, vorhanden.

Die durch die Partikelschicht hindurch genadelten Haltefasern halten die Deckschicht und die Unterlagsschicht in einem Abstand voneinander und sie sind mit der Deckschicht und der Unterlagsschicht verbunden.

Abstandsgewebe oder -gewirke sind u. a. in zwei Artikeln beschrieben, und zwar

einem Artikel aus der Fachzeitschrift "kettenwirk-praxis 3/93", 1993, Seiten 59 bis 63 "Raschelgewirkte Abstandsgewirke"

und

einem Artikel aus der Fachzeitschrift "kettenwirk-praxis 1/94", 1994, Seiten 73 bis 76 "Raschelgewirkte Abstandsgewirke"

auf deren Inhalt hiermit Bezug genommen wird und deren Inhalt Teil dieser Offenbarung und Erfindung wird.

Als Vliesstoffe kommen besonders verfestigte Stapelfaservliese, jedoch auch Filament-, Meltblown- sowie Spinnvliese in Frage, die meist zusätzlich zu verfestigen sind. Als mögliche Verfestigungsmethoden sind für Vliese die mechanische, die thermische sowie die chemische Verfestigung bekannt. Werden bei mechanischen Verfestigungen die Fasern meist durch Verwirbelung der Einzelfasern, durch Vermaschung von Faserbündeln oder durch Einnähen von zusätzlichen Fäden rein mechanisch zusammengehalten, so lassen sich durch thermische als auch durch chemische Verfahren adhäsive (mit Bindemittel) oder kohäsive (bindemittelfrei) Faser-Faser-Bindungen erzielen. Diese lassen sich bei geeigneter Rezeptierung und Prozessführung ausschließlich oder zumindest überwiegend auf Faserknotenpunkte beschränken, so dass unter Erhalt der lockeren, offenen Struktur im Vlies trotzdem ein stabiles, dreidimensionales Netzwerk gebildet wird.

Besonders vorteilhaft haben sich Vliese erwiesen, die insbesondere durch ein Übernähen mit separaten Fäden oder durch ein Vermanschen verfestigt sind.

Derartige verfestigte Vliese werden beispielsweise auf Nähwirkmaschinen des Typs "Malivlies" der Firma Karl Meyer, ehemals Malimo, hergestellt und sind unter anderem bei den Firmen Naue Fasertechnik und Techtex GmbH beziehbar. Ein Malivlies ist dadurch gekennzeichnet, dass ein Querfaservlies durch die Bildung von Maschen aus Fasern des Vlieses verfestigt wird.

Als Träger kann weiterhin ein Vlies vom Typ Kunitvlies oder Multiknitvlies verwendet werden. Ein Kunitvlies ist dadurch gekennzeichnet, dass es aus der Verarbeitung eines längsorientierten Faservlieses zu einem Flächengebilde hervorgeht, das auf einer Seite Maschen und auf der anderen Maschenstege oder Polfaser-Falten aufweist, aber weder Fäden noch vorgefertigte Flächengebilde besitzt. Auch ein derartiges Vlies wird beispielsweise auf Nähwirkmaschinen des Typs "Kunitvlies" der Firma Karl Mayer schon seit längerer Zeit hergestellt. Ein weiteres kennzeichnendes Merkmal dieses Vlieses besteht darin, dass es als Längsfaservlies in Längsrichtung hohe Zugkräfte aufnehmen kann. Ein Multiknitvlies ist gegenüber dem Kunitvlies dadurch gekennzeichnet, dass das Vlies durch das beidseitige Durchstechen mit Nadeln sowohl auf der Ober- als auch auf der Unterseite eine Verfestigung erfährt.

Schließlich sind auch Nähvliese als Vorprodukt geeignet, eine erfindungsgemäße Eindeckung und ein erfindungsgemäßes Klebeband zu bilden. Ein Nähvlies wird aus einem Vliesmaterial mit einer Vielzahl parallel zueinander verlaufender Nähte gebildet. Diese Nähte entstehen durch das Einnähen oder Nähwirken von durchgehenden textilen Fäden. Für diesen Typ Vlies sind Nähwirkmaschinen des Typs "Maliwatt" der Firma Karl Mayer, ehemals Malimo, bekannt.

Weiterhin besonders vorteilhaft ist ein Stapelfaservlies, das im ersten Schritt durch mechanische Bearbeitung vorverfestigt wird oder das ein Nassvlies ist, das hydrodynamisch gelegt wurde, wobei zwischen 2 % und 50 % der Fasern des Vlieses Schmelzfasern sind, insbesondere zwischen 5 % und 40 % der Fasern des Vlieses.

Ein derartiges Vlies ist dadurch gekennzeichnet, dass die Fasern nass gelegt werden oder zum Beispiel ein Stapelfaservlies durch die Bildung von Maschen aus Fasern des Vlieses oder durch Nadelung, Vernähung beziehungsweise Luft- und/oder Wasserstrahlbearbeitung vorverfestigt wird.

In einem zweiten Schritt erfolgt die Thermofixierung, wobei die Festigkeit des Vlieses durch das Auf- oder Anschmelzen der Schmelzfasern nochmals erhöht wird.

Als Ausgangsmaterialien für den textilen Träger sind insbesondere Polyester-, Polypropylen-, Viskose- oder Baumwollfasern vorgesehen. Die vorliegende Erfindung ist aber nicht auf die genannten Materialien beschränkt, sondern es können, für den Fachmann erkenntlich ohne erfinderisch tätig werden zu müssen, eine Vielzahl weiterer Fasern zur Herstellung des Vlieses eingesetzt werden.

Als Träger eignen sich auch solche, die aus Papier, aus einem Laminat oder aus einer Folie (zum Beispiel PP, PE, PET, PA, PU) bestehen.

In einer weiterhin bevorzugten Ausführungsform wird als Trägermaterial ein Vlies verwendet.

Die erfindungsgemäßen Klebebänder können eine Heißschmelzklebemasse auf Basis von Naturkautschuk oder Acrylaten enthalten.

Besonders vorteilhaft hat sich als Klebemasse eine solche auf Acrylathotmelt-Basis erwiesen, die einen K-Wert von mindestens 20 aufweist, insbesondere größer 30, erhältlich durch Aufkonzentrieren einer Lösung einer solchen Masse zu einem als Hotmelt verarbeitbaren System.

Das Aufkonzentrieren kann in entsprechend ausgerüsteten Kesseln oder Extrudern stattfinden, insbesondere beim damit einhergehenden Entgasen ist ein Entgasungsextruder bevorzugt.

Eine derartige Klebemasse ist in der DE 43 13 008 A1 dargelegt, auf deren Inhalt hiermit Bezug genommen wird und deren Inhalt Teil dieser Offenbarung und Erfindung wird. Diesen auf diesem Wege hergestellten Acrylatmassen wird in einem Zwischenschritt das Lösungsmittel vollständig entzogen.

Zusätzlich werden dabei weitere leichtflüchtige Bestanteile entfernt. Nach der Beschichtung aus der Schmelze weisen diese Massen nur noch geringe Anteile an flüchtigen Bestandteilen auf. Somit können alle im oben angeführten Patent beanspruchten Monomere/Rezepturen übernommen werden. Ein weiterer Vorteil der im Patent beschriebenen Massen ist darin zu sehen, dass diese einen hohen K-Wert und damit ein hohes Molekulargewicht aufweisen. Dem Fachmann ist bekannt, dass sich Systeme mit höheren Molekulargewichten effizienter vernetzen lassen. Damit sinkt entsprechend der Anteil an flüchtigen Bestandteilen.

Die Lösung der Masse kann 5 bis 80 Gew.-%, insbesondere 30 bis 70 Gew.-% Lösungsmittel enthalten.

Vorzugsweise werden handelsübliche Lösungsmittel eingesetzt, insbesondere niedrig siedende Kohlenwasserstoffe, Ketone, Alkohole und/oder Ester.

Weiter vorzugsweise werden Einschnecken-, Zweischnecken- oder Mehrschneckenextruder mit einer oder insbesondere zwei oder mehreren Entgasungseinheiten eingesetzt. In der Klebemasse auf Acrylathotmelt-Basis können Benzoinderivate einpolymerisiert sein, so beispielsweise Benzoinacrylat oder Benzoinmethacrylat, Acrylsäure- oder Methacrylsäureester. Derartige Benzoinderivate sind in der EP 0 578 151 A1 beschrieben.

Die Klebemasse auf Acrylathotmelt-Basis kann aber auch chemisch vernetzt sein.

In einer besonders bevorzugten Ausführungsform werden als Selbstklebemassen Copolymerisate aus (Meth)acrylsäure und deren Estern mit 1 bis 25 C-Atomen, Malein-, Fumar- und/oder Itaconsäure und/oder deren Estern, substituierten (Meth)acrylamiden, Maleinsäureanhydrid und anderen Vinylverbindungen, wie Vinylestern, insbesondere Vinylacetat, Vinylalkoholen und/oder Vinylethern eingesetzt.

Der Restlösungsmittel-Gehalt sollte unter 1 Gew.-% betragen.

Eine Klebemasse, die sich als besonders geeignet zeigt, ist eine niedermolekulare Acrylatschmelzhaftklebemasse, wie sie unter der Bezeichnung acResin UV oder Acronal ®, insbesondere Acronal DS 3458, von der BASF geführt wird. Diese Klebemasse mit niedrigem K-Wert erhält ihre anwendungsgerechten Eigenschaften durch eine abschließende strahlenchemisch ausgelöste Vernetzung.

Weiterhin kann eine Heißschmelzklebemasse verwendet werden, die aus der Gruppe der Naturkautschuke oder der Synthesekautschuke oder aus einem beliebigen Blend aus Naturkautschuken und/oder Synthesekautschuken besteht, wobei der Naturkautschuk oder die Naturkautschuke grundsätzlich aus allen erhältlichen Qualitäten wie zum Beispiel Crepe-, RSS-, ADS-, TSR- oder CV-Typen, je nach benötigtem Reinheits- und Viskositätsniveau, und der Synthesekautschuk oder die Synthesekautschuke aus der Gruppe der statistisch copolymerisierten Styrol-Butadien-Kautschuke (SBR), der Butadien-Kautschuke (BR), der synthetischen Polyisoprene (IR), der Butyl-Kautschuke (IIR), der halogenierten Butyl-Kautschuke (XIIR), der Acrylatkautschuke (ACM), der Etylen-Vinylacetat-Copolymeren (EVA) und der Polyurethane und/oder deren Blends gewählt werden können.

Weiterhin vorzugsweise können den Kautschuken zur Verbesserung der Verarbeitbarkeit thermoplastische Elastomere mit einem Gewichtsanteil von 10 bis 50 Gew.-% zugesetzt werden, und zwar bezogen auf den Gesamtelastomeranteil.

Stellvertretend genannt seien an dieser Stelle vor allem die besonders verträglichen Styrol-Isopren-Styrol (SIS)- und Styrol-Butadien-Styrol (SBS)-Typen.

Die Perforierung des Klebebands erfolgt mit heißen Nadeln, die sich bevorzugt auf einer Nadelwalze befinden, und zwar mit einer Dichte von mindestens 5/cm$^2$. Vorzugsweise liegt die Anzahl der Löcher pro cm$^2$ bei größer 10, besonders bevorzugt bei größer 15.

Der Durchmesser der Nadeln und daraus resultierend der Durchmesser der Löcher liegt zwischen 0,5 und 1,5 mm, insbesondere zwischen 0,9 und 1,00 mm.

Das erfindungsgemäße, einseitig selbstklebend ausgerüstete Klebeband ist als Entlüftungsband, indem das Klebeband über eine Öffnung in einem abgeschlossenen Raum geklebt wird, der einen höheren Luftdruck aufweist als der umgebende Raum, insbesondere bei der Ausschäumung der Seitenwände von Weißgeräten wie Kühlschränke, hervorragend geeignet.

Das Klebeband besteht aus einem Träger, auf den einseitig eine Heißschmelzklebemasse aufgebracht ist.

Wenn dieses Klebeband von heißen Nadeln, sprich mit einer Temperatur von bevorzugt 100 °C und besonders bevorzugt mit einer Temperatur von 170 °C bis 400 °C, durchdrungen wird, schmelzen sowohl das Trägermaterial als auch die Klebemasse in der unmittelbaren Nähe der Nadeln auf. Beide Materialien werden durch die Nadeln gleichzeitig verdrängt, so dass sich durchgängige Löcher im Klebeband ergeben.

Mit dem Herausziehen der Nadeln setzt ein im Randbereich der Löcher ein Erkaltungsvorgang ein, so dass das Trägermaterial und insbesondere die Heißschmelzklebemasse werden fest.

Auf diese Weise ergeben sich Löcher, die dauerhaft sind, sprich die sich nicht im Laufe der Zeit zusetzen, indem besonders die Klebemasse zurückfließt und das Loch verschließt.

Dieser Effekt ist bei den bisher bekannten Klebebändern zu beobachten, so dass eine längerfristige Lagerung nicht möglich ist. Des Weiteren beginnen die Locher unmittelbar nach der Fertigstellung des Klebebands durch das langsame Zurückfließen der Klebemasse zu schrumpfen, was die Luftdurchlässigkeit allmählich stark verringert.

Es ist zurzeit daher nicht möglich, eine bestimmte Luftdurchlässigkeit des Klebebands für einen längeren Zeitraum zu garantieren.

Diese Probleme sind erfindungsgemäß gelöst. Durch die Verwendung einer Heißschmelzklebemasse findet bei den üblichen (Raum-)Temperaturen keine Veränderung der Klebemasse statt. Der Durchmesser der Löcher bleibt - abhängig vom Durchmesser der Nadeln - konstant, woraus auch eine konstante Luftdurchlässigkeit des Klebebands resultiert.

**Prüfmethoden**

**Klebkraft**

Die Prüfung der Schälfestigkeit (Klebkraft) erfolgte in Anlehnung an PSTC-1. Ein 2 cm breiter Streifen des Haftklebebandes wird auf dem Prüfuntergrund wie zum Beispiel einer geschliffenen Stahlplatte oder einer PET-Platte durch fünfmaliges doppeltes Überrollen mittels einer 5 kg Rolle verklebt. Die Platte wird eingespannt und der Selbstklebestreifen über sein freies Ende an einer Zugprüfmaschine unter einem Schälwinkel von 180° mit einer Geschwindigkeit von 300 mm/min abgezogen und die dafür notwendige Kraft ermittelt. Die Messergebnisse sind in N/cm angegeben und über drei Messungen gemittelt. Alle Messungen wurden bei Raumtemperatur durchgeführt.

**Zugdehnungsverhalten / Reißdehnung**

Das Zugdehnungsverhalten der Wickelfolie wird an Prüflingen vom Typ 2 (rechteckige 150 mm lange und nach Möglichkeit 15 mm breite Prüfstreifen) nach DIN EN ISO 527-3/2/300 mit einer Prüfgeschwindigkeit von 300 mm/min, einer Einspannlänge 100 mm und einer Vorkraft von 0,3 N/cm ermittelt. Im Fall von Mustern mit rauen Schnittkanten sind die Kanten mit einer scharfen Klinge vor dem Zugversuch zu besäumen. Für die Bestimmung der Kraft oder Spannung bei 1 % Dehnung wird hiervon abweichend mit einer Prüfgeschwindigkeit von 10 mm/min und einer Vorkraftseinstellung von 0,5 N/cm an einer Zugprüfmaschine Modell Z 010 (Hersteller Zwick) gemessen. Die Prüfmaschine ist angegeben, weil der 1 %-Wert etwas von dem Auswertungsprogramm beeinflusst werden kann. Das Zugdehnungsverhalten wird, wenn nicht anders angegeben, in Maschinenrichtung (MD, Laufrichtung) geprüft. Die Kraft wird in N/Streifenbreite und die Spannung in N/Streifenquerschnitt ausgedrückt, die Bruchdehnung in %. Die Prüfergebnisse, insbesondere die Bruchdehnung (Reißdehnung), sind durch eine hinreichende Zahl von Messungen statistisch abzusichern.

**Luftdurchlässigkeit**

Die Luftdurchlässigkeit wird unter Verwendung von GURLEY-Lochplatten geprüft.

Die Luftdurchlässigkeit wird angegeben in dem Luftvolumen, welches in einer Zeiteinheit durch eine bestimmte Fläche hindurch tritt.

Folgende Hilfsmittel werden verwendet:

- Densometer (Firma W. & L.E. Gurley, Troy. N.Y.,USA)
- GURLEY-Lochplatte A (groß): Durchlassfläche = 1,0 sq.inch
- GURLEY-Lochplatte B (klein): Durchlassfläche = 0,25 sq.inch
- GURLEY-Lochplatte C (ganz klein): Durchlassfläche = 0,1 sq.inch
- Stoppuhr

Der innere Zylinder des Densometers wird bis zur Halterungsfeder angehoben und dort festgeklemmt. Dann wird die zu untersuchende Probe ohne Spannung auf die passende Lochplatte geklebt, welche in das Densometer eingelegt und festgeschraubt wird. Jetzt wird der innere Zylinder aus der Halterungsfeder gelöst, langsam bis zur Startmarke gesenkt und dann losgelassen

Mit der Stoppuhr wird die Fallzeit gemessen, und zwar

- für die Lochplatten A und B von der 100 cm$^3$- bis zur 300 cm$^3$-Marke (Luftmenge = 200 cm$^3$),
- für die Lochplatte C von der 100 cm$^3$- bis zur 150 cm$^3$-Marke (Luftmenge = 50 cm$^3$)

Prüfergebnis bei Verwendung von GURLEY-Lochplatten

Lochplatte A (groß):

$$L = \frac{200 \text{ cm}^3}{6,45 \text{cm}^2 * t}$$

Lochplatte B (klein):

$$L = \frac{200 \text{ cm}^3}{1,61 \text{cm}^2 * t}$$

Lochplatte C (ganz klein)

$$L = \frac{200 \text{ cm}^3}{0,645 \text{cm}^2 * t}$$

Lochplattenbeschreibung:

| GURLEY-Lochplatte | Durchlassfläche in cm$^2$ | In Figur 3 als "a" gekennzeichnet |
|---|---|---|
| A (groß) | 6,45 | (= 1,0 sq.inch) |
| B (klein) | 1,61 | (= 0,25 sq.inch) |
| C (ganz klein) | 0,645 | (= 0,1 sq.inch) |

Anhand der nachfolgend beschriebenen Figuren wird eine besonders vorteilhafte Ausführung des erfindungsgemäßen Streifens näher erläutert, ohne damit die Erfindung unnötig einschränken zu wollen.
Es zeigen

Figur 1 einen Streifen eines erfindungsgemäßen Klebebands mit Blick auf den Träger und

Figur 2 den Streifen des erfindungsgemäßen Klebebands nach Figur 1 im seitlichen Schnitt.

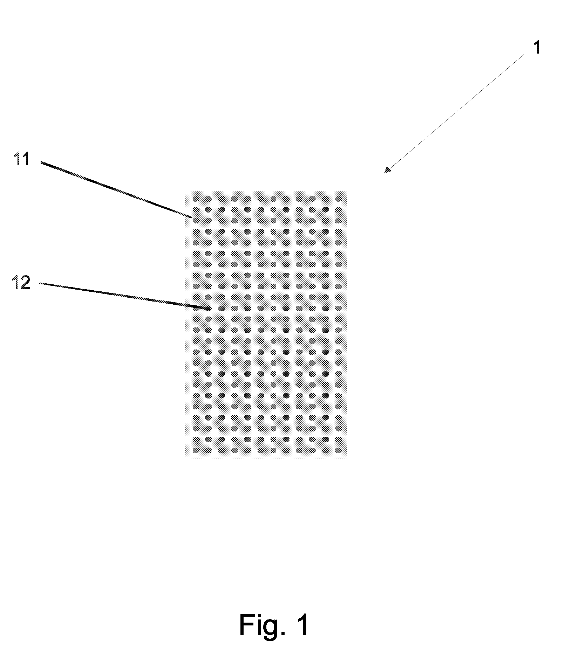

In der Figur 1 ist ein Streifen 1 eines erfindungsgemäßen Klebebands mit Blick auf den Träger 11 gezeigt. Der Streifen 1 weist einen Vliesträger 11 auf, der unterseitig mit einer Klebebeschichtung 13 versehen ist. Durch den Träger 11 sind eine Vielzahl von Löchern 12 genadelt, und zwar 14 pro Quadratmeter.

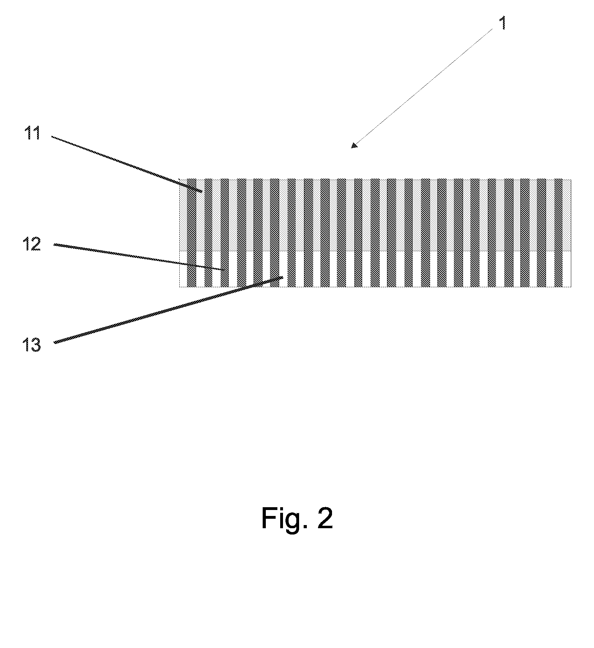

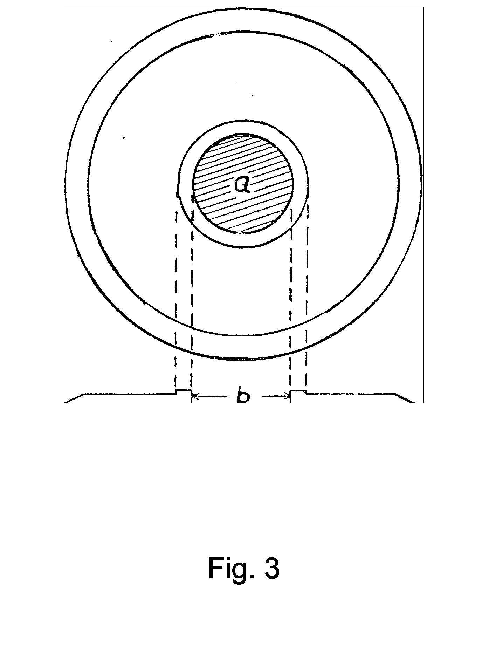

Figur 2 zeigt den Streifen 1 des erfindungsgemäßen Klebebands nach Figur 1 im seitlichen Schnitt. Unterseitig ist auf dem Träger 11 eine klebende Beschichtung 13 vorhanden. Aufgrund der heißschmelzenden Klebemasse 13 sind die Löcher 12 dauerhaft durchgängig unter Zuhilfenahme heißer Nadeln gefertigt.

**Patentansprüche**

1. Verwendung eines einseitig selbstklebend ausgerüsteten Klebebands als Entlüftungsband, indem das Klebeband über eine Öffnung in einem abgeschlossenen Raum geklebt wird, der einen höheren Luftdruck aufweist als der umgebende Raum, insbesondere bei der Ausschäumung der Seitenwände von Weißgeräten wie Kühlschränke, wobei

das einseitig selbstklebend ausgerüstete Klebeband einen Träger, auf den einseitig eine Heißschmelzklebemasse aufgebracht ist, sowie eine Luftdurchlässigkeit trägerseitig von größer 30 cm$^3$/(cm$^2$ * s) aufweist,

das Klebeband mit heißen Nadeln, die sich bevorzugt auf einer Nadelwalze befinden, perforiert ist,

die Anzahl der Löcher mindestens 5/cm$^2$ beträgt.

2. Verwendung eines einseitig selbstklebend ausgerüsteten Klebeband nach Anspruch 1, **dadurch gekennzeichnet, dass** das Klebeband zwischen 150 und 500 µm, insbesondere zwischen 200 und 350 µm dick ist.

3. Verwendung eines einseitig selbstklebend ausgerüsteten Klebeband nach den Ansprüchen 1 oder 2, **dadurch gekennzeichnet, dass** das Klebeband eine Luftdurchlässigkeit trägerseitig von größer 40 cm$^3$/(cm$^2$ * s), insbesondere von größer 50 cm$^3$/(cm$^2$ * s) aufweist.

4. Verwendung eines einseitig selbstklebend ausgerüsteten Klebeband nach zumindest einem der Ansprüche 1 bis 3, **dadurch gekennzeichnet, dass** die Reißdehnung des Klebebands zwischen 10 % und 50 % beträgt.

5. Verwendung eines einseitig selbstklebend ausgerüsteten Klebeband nach zumindest einem der vorherigen Ansprüche, **dadurch gekennzeichnet, dass** als Trägermaterial ein Vlies verwendet wird.

1

11

12

Fig. 1

Fig. 2

Fig. 3

# EP 1 602 699 A1

**Europäisches Patentamt**

## EUROPÄISCHER RECHERCHENBERICHT

Nummer der Anmeldung

EP 05 10 3612

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| X | WO 00/66355 A (FLEXIPAK DISTRIBUTING, L.L.C) 9. November 2000 (2000-11-09) * Zusammenfassung * * Seite 4, Zeilen 8-14; Ansprüche *<br>----- | 1-4 | C09J7/04<br>B29C44/34<br>B29C44/56 |
| Y | "Technical Data Sheet 3M Vent Tape 394"[Online] März 2003 (2003-03), XP002347400 Gefunden im Internet: URL:http://multimedia.mmm.com/mws/mediaweb server.dyn?CCCCCC1JVORCXf1Cpf1CCC3J5nYHAb3 r-> [gefunden am 2005-09-30] * das ganze Dokument *<br>----- | 1-5 | |
| Y | "Technical Data Sheet 3M Venting Tape 3394"[Online] 1999, XP002347401 Gefunden im Internet: URL:http://multimedia.mmm.com/mws/mediaweb server.dyn?UUUUUUC04ehUnx7UGx7UUU9dwE5Zs7h e-> [gefunden am 2005-09-30] * das ganze Dokument *<br>----- | 1-5 | |
| Y | US 3 085 024 A (BLACKFORD BENJAMIN B) 9. April 1963 (1963-04-09) * Spalte 3, Zeilen 50-66; Abbildungen 5,6 *<br>----- | 1-4 | RECHERCHIERTE SACHGEBIETE (Int.Cl.7)<br><br>C09J<br>B29C |
| Y | US 3 085 572 A (JOHNSON & JOHNSON) 16. April 1963 (1963-04-16) * Spalte 1, Zeile 25 - Spalte 2, Zeile 40 *<br><br>* Spalte 3, Zeile 30 - Spalte 4, Zeile 35; Abbildungen 2-4 *<br>----- | 1-5 | |

Der vorliegende Recherchenbericht wurde für alle Patentansprüche erstellt

| Recherchenort | Abschlußdatum der Recherche | Prüfer |
|---|---|---|
| München | 30. September 2005 | Meier, S |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

...............................................................................
& : Mitglied der gleichen Patentfamilie, übereinstimmendes Dokument

EPO FORM 1503 03.82 (P04C03)

**EP 1 602 699 A1**

**ANHANG ZUM EUROPÄISCHEN RECHERCHENBERICHT
ÜBER DIE EUROPÄISCHE PATENTANMELDUNG NR.**

EP 05 10 3612

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

30-09-2005

| Im Recherchenbericht angeführtes Patentdokument | Datum der Veröffentlichung | Mitglied(er) der Patentfamilie | Datum der Veröffentlichung |
|---|---|---|---|
| WO 0066355 A | 09-11-2000 | AU 4494100 A | 17-11-2000 |
| US 3085024 A | 09-04-1963 | KEINE | |
| US 3085572 A | 16-04-1963 | GB 978566 A | 23-12-1964 |

Für nähere Einzelheiten zu diesem Anhang : siehe Amtsblatt des Europäischen Patentamts, Nr.12/82

EPO FORM P0461

12